# FASCICULE DE BREVET EUROPEEN

(11) **EP 3 257 254 B1**
(45) Date de publication et mention de la délivrance du brevet: **04.01.2023**
(21) Numéro de dépôt: 16706988.9
(22) Date de dépôt: 10.02.2016
(51) Int. Cl.: H04N 21/242, H04R 27/00, H04N 21/434, H04N 21/81, H04S 7/00, H04N 21/43

(54) **PROCÉDÉ DE SYNCHRONISATION ET DE RESTITUTION DE FLUX MULTIMEDIA**
VERFAHREN ZUR SYNCHRONISATION UND DARSTELLUNG VON MULTIMEDIA-STRÖMEN
METHOD FOR SYNCHRONISING AND RENDERING MULTIMEDIA STREAMS

(30) Priorité: 10.02.2015 FR 1551056
(43) Date de publication de la demande: 20.12.2017
(73) Titulaire: Devialet, 75001 Paris (FR)
(72) Inventeur: COQUERET, Charles, 75012 Paris (FR); CALMEL, Pierre-Emmanuel, 78150 Le Chesnay (FR); HUFFENUS, Alexandre, 38000 Grenoble (FR)
(74) Mandataire: Lavoix
(86) Numéro de dépôt international: PCT/EP2016/052789
(87) Numéro de publication internationale: WO 2016/128440

(56) Documents cités:
- EP-A2- 1 404 075
- FR-A1- 2 981 529
- JP-A- 2008 118 549
- US-A1- 2006 233 266
- US-A1- 2015 016 476

## Description

La présente invention concerne un procédé de synchronisation d'au moins deux systèmes de restitution de flux multimédia.

L'invention concerne, également, un procédé de restitution de flux multimédia par au moins deux systèmes de restitution de flux multimédia.

L'invention concerne, en outre, une installation de restitution associée.

L'invention porte, en particulier, sur le domaine des enceintes acoustiques. Une enceinte acoustique est un système comprenant un ou plusieurs haut-parleurs, permettant la reproduction acoustique d'un son à partir d'un signal électrique produit par un amplificateur audio.

Lorsque plusieurs enceintes sont présentes dans un même système audio, chaque enceinte doit reproduire le canal audio qui lui est attribué en simultané des autres enceintes pour éviter un retard entre les sons générés par chaque enceinte.

Pour cela, les enceintes sont branchées physiquement à un même amplificateur.

Cependant, lorsque chaque enceinte intègre un amplificateur et qu'il n'existe pas de liens physiques de synchronisation entre les enceintes, il convient de synchroniser les horloges de chaque amplificateur d'enceinte pour que les enceintes restituent le même son au même instant.

Il est connu de l'état de la technique, un protocole, le Protocole d'Heure Réseau (en anglais *Network Time Protocol*), qui permet de synchroniser, via un réseau informatique, l'horloge locale d'ordinateurs sur une référence d'heure.

Cependant, la synchronisation des horloges obtenue avec un tel protocole n'est pas assez précise pour synchroniser des horloges d'enceintes acoustiques. En effet, l'écart de synchronisation est généralement supérieur à 5 millisecondes (ms).

Le document US 2006/0233266 A décrit un exemple de procédé de synchronisation.

L'un des buts de l'invention est de synchroniser les horloges de systèmes de restitution de flux multimédia non reliés physiquement les uns aux autres, de manière précise, c'est-à-dire avec un écart de synchronisation inférieur à 100 microsecondes (µs).

A cet effet, l'invention a pour objet un procédé de synchronisation d'au moins deux systèmes de restitution de flux multimédia selon la revendication indépendante 1.

Suivant des modes particuliers de mise en œuvre, le procédé de synchronisation comprend une ou plusieurs des caractéristiques suivantes, prise(s) isolément ou selon toutes les combinaisons techniquement possibles :
- le seuil prédéterminé est inférieur ou égal à 100 microsecondes.
- les impulsions sont issues du réseau électrique domestique.
- le système principal horloge est un système de restitution de flux multimédia.
- lorsqu'au moins un système de restitution particulier reçoit un flux multimédia différent du flux multimédia reçu par le système principal multimédia, le procédé comprend l'envoi par ledit système dépendant multimédia particulier, à la place du système principal multimédia, d'une date de restitution du flux multimédia différent, exprimée dans la base de temps dudit système dépendant multimédia particulier, à l'ensemble des systèmes dépendants multimédia recevant le même flux multimédia différent que ledit système dépendant multimédia particulier.

L'invention concerne également un procédé de restitution de flux multimédia par au moins deux systèmes de restitution de flux multimédia, l'un des systèmes de restitution étant un système principal multimédia et au moins l'un des systèmes de restitution étant un système dépendant multimédia, le procédé comprenant :
- la synchronisation des systèmes de restitution par un procédé de synchronisation tel que défini plus haut, et
- la restitution par chaque système de restitution du flux multimédia reçu à la date effective déterminée pour chaque système de restitution.

L'invention concerne aussi une installation de restitution de flux multimédia comprenant :
- au moins deux systèmes de restitution de flux multimédia, l'un des systèmes de restitution étant un système principal multimédia et au moins l'un des systèmes de restitution étant un système dépendant multimédia, et
- un système principal horloge,
les systèmes de restitution et le système principal horloge étant propre à mettre en oeuvre un procédé de restitution de flux multimédia tel que défini plus haut.

D'autres caractéristiques et avantages de l'invention apparaîtront à la lecture de la description qui suit de modes de réalisation de l'invention, donnée uniquement à titre d'exemples non limitatifs et en référence aux dessins annexés dans lesquels :
- la figure 1 est une représentation schématique d'un réseau d'alimentation, de canaux de transfert de flux multimédia et d'une installation de restitution de flux multimédia selon l'invention,
- la figure 2 est un organigramme d'un exemple de mise en oeuvre d'un procédé de restitution selon l'invention, le procédé comprenant une première phase de synchronisation et une deuxième phase de restitution, et
- la figure 3 est un schéma illustrant un axe de temps relatif à un signal principal d'horloge, deux axes de temps relatifs à deux signaux dépendants d'horloge, ainsi que des impulsions émises par le réseau d'alimentation de la figure 1.

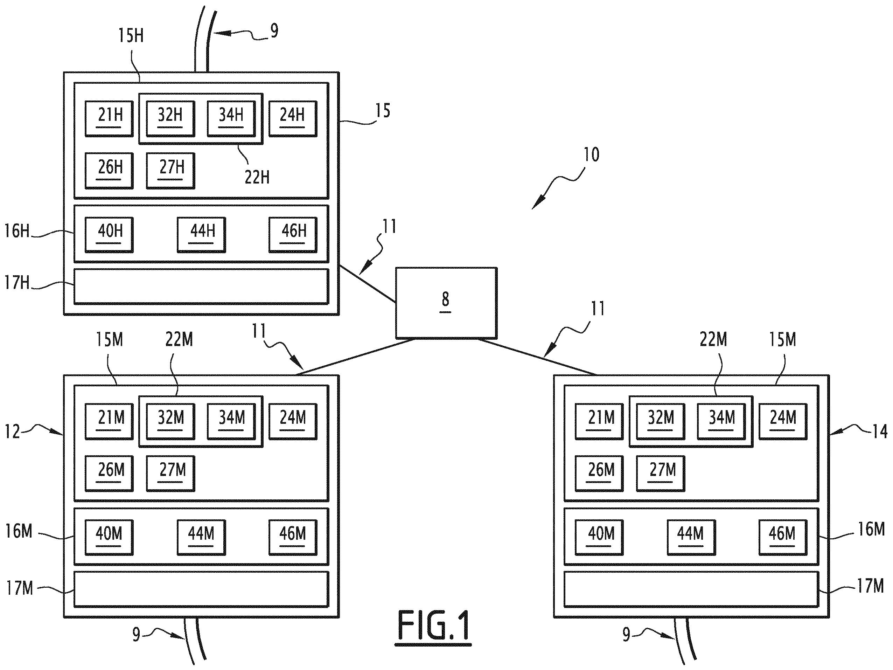

Il est illustré sur la figure 1, un réseau d'alimentation 8, des canaux 9 de transfert de flux multimédia et une installation 10 de restitution de flux multimédia alimentée par le réseau d'alimentation 8 et propre à recevoir le flux multimédia en provenance des canaux 9.

Le réseau d'alimentation 8 est, par exemple, le réseau électrique domestique. Le signal électrique généré par le réseau électrique est une onde sinusoïdale. La fréquence du signal électrique généré par le réseau électrique est, par exemple, de 50 Hertz (Hz) ou de 60 Hz. Dans la suite de la description, chaque portion d'un signal sinusoïdal délimité par deux passages par zéro consécutif du signal sinusoïdal est appelée « impulsion » ou « pulsation ». La période séparant deux impulsions du réseau est notée T.

Le réseau d'alimentation 8 est relié physiquement à l'installation 10 via des câbles de connexion 11.

Les canaux 9 sont configurés pour acheminer un flux multimédia à l'installation 10. Le flux multimédia est, par exemple, un son ou une vidéo.

Les canaux 9 sont reliés physiquement à l'installation 10, c'est-à-dire par voie filaire.

En variante, le flux multimédia est transmis à l'installation 10 suivant un protocole de transmission sans fil suivant, par exemple, les normes du groupe IEEE 802.11 (Wi-Fi) ou du groupe IEEE 802.15 (Bluetooth).

L'installation 10 comprend au moins deux systèmes de restitution 12, 14 de flux multimédia tels que l'un des systèmes de restitution 12, 14 est un système principal multimédia 12 et au moins l'un des systèmes de restitution 12, 14 est un système dépendant multimédia 14. L'installation 10 comprend, en outre, au moins un système de référence horloge 15.

Les systèmes de restitution 12, 14 et les systèmes de référence horloge 15 sont propres à interagir pour mettre en oeuvre un procédé de restitution de flux multimédia selon l'invention.

Les systèmes de référence horloge 15 et les systèmes de restitution 12, 14 ne sont pas reliés les uns les autres par des liens physiques dédiés à la synchronisation de ces systèmes.

Les systèmes de restitution 12, 14 sont des systèmes de restitution de flux multimédia, par exemple, des enceintes audio. Le système principal multimédia 12 est choisi arbitrairement parmi l'ensemble des systèmes de restitution 12, 14. Ainsi, les composants du système principal multimédia 12 et de chaque système dépendant multimédia 14 sont identiques. Le système principal multimédia 12 est propre à commander les systèmes dépendants multimédia 14.

Les systèmes de référence horloge 15 sont suivant un mode de réalisation principal, illustré en figure 1, également des systèmes de restitution de flux multimédia comportant les mêmes composants que les systèmes de restitution 12, 14. Dans ce cas, chacun des systèmes de référence horloge 15 est un système principal multimédia 12 ou un système dépendant multimédia 14.

En variante, les systèmes de référence horloge 15 sont des systèmes de gestion de la synchronisation de l'ensemble des systèmes de restitution 12, 14 et ne sont alors pas aptes à reproduire un flux multimédia. Dans ce cas, les systèmes de référence horloge 15 sont différents des systèmes de restitution 12, 14.

Dans la suite de la description, les composants du système principal multimédia 12 et de chaque système dépendant multimédia 14 sont référencés par les mêmes numéros puisque de tels composants sont identiques. Les composants des systèmes de restitution 12, 14 sont, notamment, référencés par leur numéro suivi de la lettre « M». Les composants des systèmes de référence horloge 15, identiques aux composants des systèmes de restitution 12, 14 sont référencés par le même numéro que ces composants suivi de la lettre «H ». Par exemple, un composant 10M d'un système de restitution 12, 14 sera référencé composant 10H pour les systèmes de référence horloge 15. Les composants des systèmes dépendants multimédia 14 et des systèmes de référence horloge 15 étant identiques aux composants du système principal multimédia 12, seuls les composants du système principal multimédia 12 sont décrits dans ce qui suit.

Dans l'exemple illustré sur la figure 1, l'installation 10 comprend deux systèmes de restitution de flux multimédia 12, 14 tel que l'un des systèmes de restitution 12, 14 est un système principal multimédia 12 et l'un des systèmes de restitution 12, 14 est un système dépendant multimédia 14. L'installation 10 comprend, en outre, un système de référence horloge 15.

En variante, l'installation 10 comprend une pluralité de systèmes dépendants multimédia 14 et une pluralité de systèmes de référence horloge 15.

Comme illustré sur la figure 1, le système principal multimédia 12 comprend une entité horloge 15M, une entité multimédia 16M et une entité de communication 17M.

L'entité horloge 15M est propre à générer un signal d'horloge. Un signal d'horloge est un signal électrique oscillant de fréquence fixe qui rythme les actions d'un circuit. Une période d'un signal d'horloge est appelée « cycle d'horloge » ou « coup d'horloge ».

L'entité horloge 15M est propre à communiquer avec l'ensemble des autres entités horloge 15M de l'installation 10 via l'entité de communication 17M. L'entité horloge 15M est, également, propre à communiquer avec l'entité multimédia 16M via l'entité de communication 17M.

Comme illustré sur la figure 1, l'entité horloge 15M du système principal multimédia 12 comprend un module de détection de pulsations 21M, un module de génération d'un signal d'horloge 22M, un compteur 24M de coups d'horloge, une unité de calcul 26M et un analyseur 27M de différence.

Le module de détection 21M est propre à être connecté au réseau d'alimentation 8 via les câbles de connexion 11.

Le module de détection 21M est propre à recevoir et à détecter les pulsations du signal en provenance du réseau d'alimentation 8. En particulier, le module de détection 21M est propre à détecter des phases particulières de l'onde sinusoïdale générée par le réseau d'alimentation 8, avantageusement les phases 0° et 180°, c'est-à-dire les passages par zéro du signal électrique à la fréquence 1/T. Le passage par zéro a lieu toutes les 10 millisecondes (ms) pour un signal électrique sinusoïdal de fréquence 50 Hz et toutes les 8 ms pour un signal électrique de fréquence 60 Hz.

Le module de détection 21M est propre à transmettre les pulsations détectées à l'unité de calcul 26M et au module de génération 22M.

Le module de génération 22M est propre à générer un signal d'horloge à partir des pulsations détectées par le module de détection 21M.

Le module de génération 22M comprend une horloge interne ajustable 32M et un montage électronique multiplicateur 34M.

Le montage électronique multiplicateur 34M permet d'augmenter la fréquence du signal en sortie du module de génération 22M par rapport à la fréquence du signal transmis par le module de détection 21M qui est prise comme référence. La fréquence du signal en sortie du module de génération 22M est égale à la fréquence du signal détecté par le module de détection 21M multipliée par un coefficient prédéfini, et la phase du signal en sortie du module de génération 22M est ajustée sur celle de la fréquence du signal détecté par le module de détection 21M.

Le montage électronique 34M est, par exemple, un PLL (de l'anglais *Phase-Locked Loop*). Un PLL ou boucle à phase asservie, ou encore boucle à verrouillage de phase, est un montage électronique permettant d'asservir une fréquence de sortie sur un multiple d'une fréquence d'entrée.

Le montage électronique 34M permet de générer, en sortie du module de génération 22M, un signal d'horloge de fréquence élevée, par exemple de fréquence égale à 10 Mégahertz (MHz) à partir d'un signal d'entrée de fréquence plus faible, par exemple égal à 100 Hz dans le cas d'un réseau électrique générant un signal sinusoïdal de fréquence 50 Hz. Le signal d'entrée est, en effet, de fréquence doublée par rapport à la fréquence de 50 Hz du réseau électrique car une période d'une onde sinusoïdale comprend deux passages par zéro et donc deux impulsions.

Le compteur 24M est propre à compter les coups d'horloge, c'est-à-dire les impulsions, générées par le module de génération 22M.

Le compteur 24M est un circuit électronique comportant, par exemple, des bascules et un réseau combinatoire.

Le compteur 24M comprend une variable entière propre à s'incrémenter d'une unité à chaque coup d'horloge, c'est-à-dire à chaque impulsion du signal d'horloge, et une mémoire interne propre à stocker la dernière valeur de la variable entière.

Le compteur 24M est propre à transmettre la valeur de sa variable entière à l'unité de calcul 26M à chaque incrémentation de la variable entière.

L'unité de calcul 26M est propre à déterminer la date de détection de la prochaine impulsion Iₙ₊₁ du réseau d'alimentation 8 par le module de détection 21M par rapport à une base de temps commune.

La date déterminée par l'unité de calcul 26M de chaque système de restitution 12, 14 est appelée prochaine date locale dépendante t_{d,n+1}. Dans le cas d'un système de référence horloge 15, la date déterminée par l'unité de calcul 26H du système de référence horloge 15 est appelée prochaine date locale principale t_{p,n+1}. Il est entendu par le terme « date », le moment où un événement a eu lieu, a lieu ou doit avoir lieu par rapport à une base de temps commune. La base de temps commune est, par exemple, l'heure POSIX ou l'heure UNIX. L'heure POSIX est une mesure de temps relative au nombre de secondes écoulées depuis le 1^{er} janvier 1970, 00:00:00 UTC (de l'anglais *Coordinated Universal Time*), jusqu'à l'évènement à dater hors secondes intercalaires.

Les systèmes de restitution 12, 14 et le système de référence horloge 15 de l'installation 10 ont la même base de temps commune, par exemple l'heure POSIX.

L'analyseur 27M de différence est propre à déterminer l'écart temporel Δs entre une origine du signal d'horloge généré par le système de référence horloge 15 et une origine du signal d'horloge généré par chaque système de restitution 12, 14, chaque origine étant définie dans la base de temps commune.

L'entité multimédia 16M est propre à restituer un flux multimédia à partir d'un flux multimédia reçu par l'entité multimédia 16M via les canaux multimédia 9. Par l'expression « restitution d'un flux multimédia », il est notamment entendu que le flux multimédia, initialement sous forme de signal analogique ou numérique, est converti en son.

L'entité multimédia 16M comprend un module d'association 40M d'une date au flux multimédia considéré, un module d'interprétation 44M de la date associé au flux multimédia considéré et un module de restitution 46M du flux multimédia.

Le module d'association 40M est propre à recevoir un flux multimédia en provenance des canaux 9. Le module d'association 40M est propre à intégrer dans une métadonnée des informations sur la date à laquelle le contenu du flux multimédia doit être restitué. Une métadonnée est une donnée servant à définir ou décrire une autre donnée.

Le module d'interprétation 44M est propre à interpréter les informations sur la date à laquelle le contenu du flux multimédia doit être restitué.

Le module de restitution 46M est propre à restituer localement le flux multimédia en fonction des informations interprétées par le module d'interprétation 44M.

L'entité de communication 17M est propre à communiquer avec l'extérieur, notamment avec l'ensemble des systèmes de restitution 12,14 et l'ensemble des systèmes de référence horloge 15. Par exemple, l'entité de communication 17M est propre à établir une communication via un protocole de transmission sans fil suivant les normes du groupe IEEE 802.11 (Wi-Fi), du groupe IEEE 802.15 (Bluetooth) ou du groupe IEEE 802.15.4 (ZigBee) ou encore, suivant un protocole de communication par courants porteurs en ligne (abrégé en CPL).

Suivant un mode particulier de réalisation différent de celui décrit précédemment, les systèmes de référence horloge 15 sont dépourvus d'entité multimédia 16H. Les systèmes de référence horloge 15 sont alors incapables de restituer un flux multimédia mais assurent la synchronisation des systèmes de restitution 12, 14 à partir de leurs entités d'horloge 15H et de leurs entités de communication 17H.

Dans la suite de la description, on suppose que les systèmes de référence horloge 15 sont des systèmes de restitution de flux multimédia.

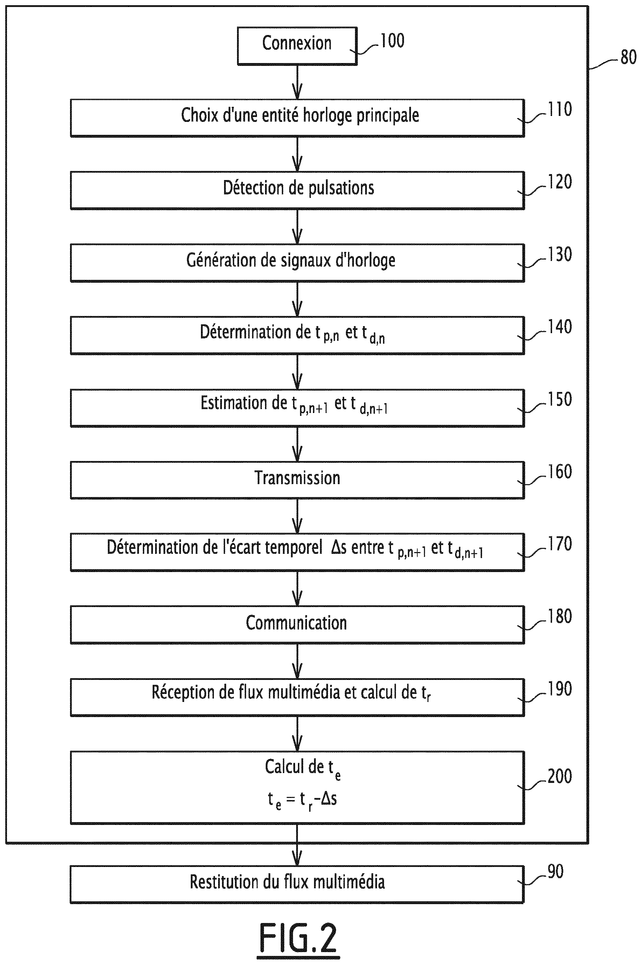

Le fonctionnement de l'installation 10 de restitution de flux multimédia va maintenant être décrit en référence à la figure 2 qui est un organigramme d'un exemple de mise en œuvre d'un procédé de restitution de flux multimédia selon l'invention.

Le procédé de restitution de flux multimédia comprend une première phase 80 de synchronisation des systèmes de restitution 12, 14. Cette première phase de synchronisation est mise en œuvre par un procédé de synchronisation. Le procédé de restitution comprend également une deuxième phase 90 de restitution de flux multimédia par les systèmes de restitution 12, 14 synchronisés.

Le procédé de synchronisation comprend une première étape 100 de connexion de chaque système de référence horloge 15 et de chaque système de restitution 12, 14 au réseau d'alimentation 8 via les câbles de connexion 11.

L'étape de connexion 100 est réalisée par un opérateur.

Le procédé de synchronisation comprend, ensuite, une étape 110 de choix d'une unique entité horloge 15H parmi l'ensemble des entités horloge 15H des systèmes de référence horloge 15 lorsque l'installation 10 comprend au moins deux systèmes de référence horloge 15 et donc au moins deux entités horloge 15H. Dans la suite de la description, l'entité horloge 15H choisie est appelée « entité horloge principale 15H » et le système de référence horloge 15 correspondant est appelé «système principal horloge 15 ». L'entité horloge principale 15H est déterminée arbitrairement. Par exemple, le système principal horloge 15 est le premier système de référence horloge 15 connecté au réseau d'alimentation 8. Les systèmes de référence horloge 15 dont l'entité horloge 15H n'a pas été choisie sont alors désactivés et ne sont donc plus utilisés dans la suite du procédé. Seuls sont donc considérés dans la suite du procédé, le système principal horloge 15 relatif à l'entité horloge principale 15H et les systèmes de restitution 12, 14.

Lorsque l'installation 10 comporte un seul système de référence horloge 15, ce système de référence horloge 15 est le système principal horloge 15.

Lorsque les systèmes de référence horloge 15 sont des systèmes de restitution 12, 14 de flux multimédia, le système principal horloge 15 est choisi parmi l'ensemble de ces systèmes de restitution 12, 14.

Dans la suite de la description, les entités horloges 15M des systèmes de restitution 12, 14, différents du système principal horloge 15, sont aussi appelées « entités horloges dépendantes 15M ».

L'étape de choix 110 est mise en œuvre par l'ensemble des systèmes de référence 12.

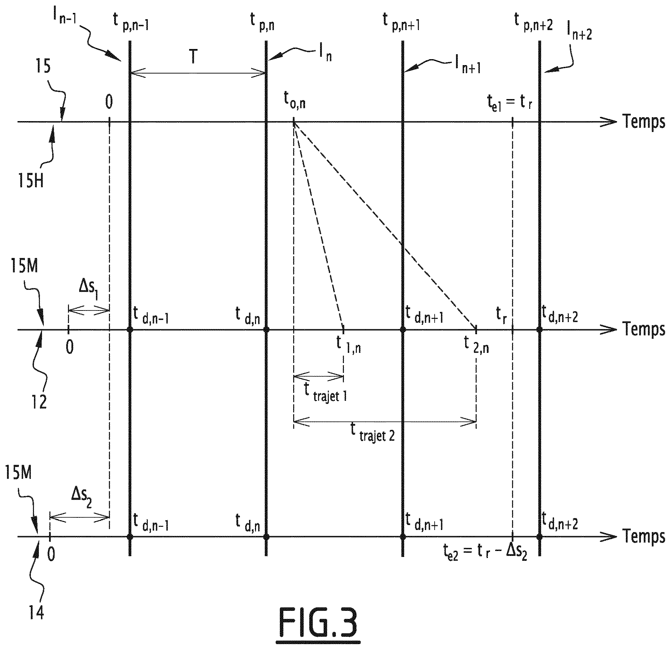

Le procédé de synchronisation comprend, ensuite, une étape 120 de détection de impulsions, notées Iₙ₋₁, Iₙ, Iₙ₊₁, Iₙ₊₂ sur la figure 3, en provenance du réseau d'alimentation 8 par le système principal horloge 15 et par chaque système de restitution 12, 14. Les impulsions sont émises à une période régulière, c'est-à-dire à une fréquence fixe. La période d'émission des impulsions est, par exemple, égale à 10 ms dans le cas où le réseau d'alimentation 8 est le réseau électrique domestique de fréquence 50 Hz. La période entre deux impulsions Iₙ, Iₙ₊₁ consécutives émises par le réseau d'alimentation 8 est appelée « période T des impulsions du réseau».

L'étape de détection 120 est mise en œuvre par le module de détection 21H du système principal horloge 15 et par les modules de détection 21M des systèmes de restitution 12, 14.

Chaque module de détection 21H, respectivement 21M, transmet, ensuite, les pulsations détectées au module de génération 22H, respectivement 22M, associé et à l'unité de calcul 26H, respectivement 26M, associée.

Le procédé de synchronisation comprend, ensuite, une étape 130 de génération d'un signal principal d'horloge et d'au moins un signal dépendant d'horloge.

L'étape de génération 130 comprend, pour le système principal horloge 15, la multiplication de la fréquence du signal d'entrée, c'est-à-dire du signal en provenance du réseau d'alimentation 8, pour obtenir un signal principal d'horloge. La multiplication est effectuée par le montage électronique multiplicateur 34H à partir des impulsions détectées.

De même, l'étape de génération 130 comprend, pour chaque système de restitution 12, 14, la multiplication de la fréquence du signal d'entrée, c'est-à-dire du signal en provenance du réseau d'alimentation 8, pour obtenir un signal dépendant d'horloge. La multiplication est effectuée par le montage électronique multiplicateur 34H à partir des impulsions détectées.

Le signal principal d'horloge et chaque signal dépendant d'horloge ont la même fréquence d'horloge, par exemple, égale à 10 MHz. Dans cet exemple, le nombre de coups d'horloge entre deux impulsions consécutives du réseau électrique domestique de fréquence 50 Hz est donc égal 10⁵. Le nombre de coups d'horloge entre deux impulsions est relatif à une durée égale à la période T des impulsions du réseau.

La valeur de la fréquence d'horloge de chaque signal est transmise à l'unité de calcul 26H, 26M correspondante.

Les signaux dépendants d'horloge sont généralement désynchronisés par rapport au signal principal d'horloge. Par le terme « désynchronisé », il est entendu que les signaux dépendants d'horloge n'ont pas la même origine dans la base de temps commune que le signal principal d'horloge et ont donc des phases différentes de celle du signal principal d'horloge. Ainsi, le signal principal d'horloge définit une base de temps principale et chaque signal dépendant d'horloge définit une base de temps dépendante.

La figure 3 illustre l'axe de temps relatif au signal principal d'horloge généré par l'entité horloge principale 15M et les axes de temps relatifs au signal dépendant d'horloge généré par chacune des entités horloge dépendantes 15M du système principal multimédia 12 et du système dépendant multimédia 14. Les origines O du signal principal d'horloge et du signal dépendant d'horloge relatif au système principal multimédia 12 sont décalées d'un écart temporel Δs₁. Les origines O du signal principal d'horloge et du signal dépendant d'horloge relatif au système dépendant multimédia 14 sont décalées d'un écart temporel Δs₂. Le présent procédé permet, notamment, de déterminer les écarts temporels Δs₁ et Δs₂.

L'étape de génération 130 est mise en œuvre par les modules de génération 22H et 22M.

Le procédé de synchronisation comprend, ensuite, une étape 140 de détermination, dans la base de temps du système principal horloge 15, de l'instant de détection de la dernière impulsion Iₙ en provenance du réseau d'alimentation 8 par le module de détection 21H du système principal horloge 15. L'instant déterminé dans la base de temps principale de l'entité horloge principale 15H est appelé «date locale principale t_{p,n}».

L'étape 140 comprend également la détermination, dans la base de temps de chaque système de restitution 12, 14, de l'instant de détection de la dernière impulsion Iₙ en provenance du réseau d'alimentation 8 par le module de détection 21M dudit système de restitution 12, 14. L'instant déterminé dans la base de temps dépendante de chaque entité horloge dépendante 15M est appelé « date locale dépendante t_{d,n}».

La date locale d'une entité horloge 15H, 15M est la dernière valeur de la variable entière du compteur 24H, 24M de l'entité horloge 15H, 15M à l'instant donné. La valeur de la variable entière est, en effet, relative à une date définie dans la base de temps commune, par exemple l'heure POSIX.

Le procédé de synchronisation comprend, ensuite, une étape 150 d'estimation de la date de la prochaine impulsion en provenance du réseau d'alimentation 8 qui sera détectée par les modules de détection 21H, 21M.

L'étape d'estimation 150 comprend pour l'entité horloge principale 15M du système principal horloge 15, l'addition de la date locale principale t_{p,n} et de la période T des impulsions du réseau pour obtenir une prochaine date locale principale t_{p,n+1} exprimée dans la base de temps principale. La prochaine date locale principale t_{p,n+1} est la date, exprimée dans la base de temps principale, d'occurrence de la prochaine impulsion en provenance du réseau d'alimentation 8. La prochaine date locale principale t_{p,n+1} est estimée par le système principal horloge 15.

De même, l'étape d'estimation 150 comprend, pour l'entité horloge dépendante 15M de chaque système de restitution 12, 14, l'addition de la date locale dépendante t_{d,n} du système de restitution 12, 14 considéré et de la période T du réseau pour obtenir une prochaine date locale dépendante t_{d,n+1} exprimée dans la base de temps dépendante du système de restitution 12, 14 considéré. La prochaine date locale dépendante t_{d,n+1} est, pour chaque système de restitution 12, 14, la date, exprimée dans la base de temps dépendante du système de restitution 12, 14 considéré, d'occurrence de la prochaine impulsion en provenance du réseau d'alimentation 8. La prochaine date locale dépendante t_{d,n+1} est estimée par le système de restitution 12, 14.

Il est illustré sur la figure 3 les impulsions Iₙ₋₁, Iₙ, Iₙ₊₁, Iₙ₊₂ émises par le réseau d'alimentation 8, la date locale principale t_{p,n} de l'entité horloge principale 15H et les dates locales dépendantes t_{d,n} des entités horloge dépendantes 15M du système principal multimédia 12 et du système dépendant multimédia 14 à la détection de la dernière impulsion Iₙ. La date de la prochaine impulsion Iₙ₊₁ estimée par l'entité horloge principale 15M est t_{p,n+1} et la date de la prochaine impulsion Iₙ₊₁ estimée par chaque entité horloge dépendante 15M est t_{d,n+1}.

L'étape d'estimation 150 est mise en œuvre, notamment, par l'unité de calcul 26M de l'entité d'horloge principale 15M et par les unités de calcul 26M des entités horloge dépendantes 15M.

Le procédé de synchronisation comprend, ensuite, une étape 160 de transmission de la prochaine date locale principale t_{p,n+1} exprimée dans la base de temps principale à chacune des entités horloge dépendantes 15M. La transmission est effectuée par l'entité de communication 17M du système principal horloge 15.

Lors de l'étape de transmission 160, la prochaine date locale principale t_{p,n+1} n'est pas transmise instantanément à l'unité de calcul 26M mais avec un temps de latence appelé temps de trajet tₜᵣₐⱼₑₜ. Le temps de trajet est variable et fluctue dans le temps.

Comme illustré sur la figure 3, lorsque la date de la prochaine impulsion t_{p,n+1} estimée par l'entité horloge principale 15H est envoyée à la date t_{0,n} et est reçue à la date t_{1,n} , le temps de trajet tₜᵣₐⱼₑₜ₁ est inférieur à la période T entre deux impulsions consécutives du réseau 8. Dans ce cas, la prochaine impulsion est l'impulsion Iₙ₊₁ pour l'entité horloge dépendante 15M.

Par contre, lorsque la date de la prochaine impulsion t_{p,n+1} estimée par l'entité horloge 15M est envoyée à la date t_{0,n} et est reçue à la date t_{2,n}, le temps de trajet tₜᵣₐⱼₑₜ₂ est supérieur à la période T entre deux impulsions consécutives du réseau 8. Dans ce cas, la prochaine impulsion est l'impulsion Iₙ₊₂ pour l'entité horloge dépendante 15M alors que la date envoyée par l'entité horloge principale 15H est relative à l'impulsion Iₙ₊₁.

Le procédé de synchronisation comprend, ensuite, une étape 170 de détermination de l'écart temporel Δs entre l'origine du signal principal d'horloge et l'origine de chaque signal dépendant d'horloge, lequel est égal à la différence entre la prochaine date locale principale t_{p,n+1} du système horloge principal 15 et la prochaine date locale dépendante t_{d,n+1} du système de restitution 12, 14 considéré.

L'étape de détermination 170 comprend la réception par chaque entité horloge dépendante 15M de la prochaine date locale principale t_{p,n+1} envoyée par l'entité horloge principale 15M et exprimée dans la base de temps principale.

L'étape de détermination 170 comprend, pour chaque entité horloge dépendante 15M, le calcul de la différence Δₙ₊₁ entre la prochaine date locale principale t_{p,n+1} transmise et exprimée dans la base de temps principale et la prochaine date locale dépendante t_{d,n+1} déterminée pour l'entité horloge dépendante 15M et exprimée dans la base de temps dépendante. La différence Δₙ₊₁ est calculée par l'analyseur 27M de différence. La différence Δₙ₊₁ calculée est ensuite enregistrée en mémoire de l'analyseur 27M de différence.

L'étape de détermination 170 comprend, également, la comparaison de la différence Δₙ₊₁ calculée par rapport à une différence étalon Δ_{étalon} propre à chaque entité horloge dépendante 15M. La valeur initiale de la différence étalon Δ_{étalon} est la valeur de la première différence Δₙ₊₁ calculée pour l'entité horloge dépendante 15M considérée. Lorsque la différence Δₙ₊₁ calculée est inférieure à la différence étalon Δ_{étalon}, la valeur de la différence étalon Δ_{étalon} est remplacée par la valeur de la différence Δₙ₊₁ calculée et la différence Δₙ₊₁ calculée est considérée comme « valide ». En effet, une différence supérieure à une différence calculée antérieurement signifie que le temps de trajet est plus élevé que celui de la différence étalon Δ_{étalon} et donc que la date envoyée par l'entité horloge principale 15H est potentiellement arrivée après l'impulsion pour laquelle la prochaine date locale principale t_{p,n+1} a été estimée.

Lorsque la différence Δₙ₊₁ calculée est supérieure à la différence étalon Δ_{étalon}, la différence Δₙ₊₁ calculée est considérée comme « invalide ».

La différence Δₙ₊₁ est également calculée pour l'entité horloge principale 15H. Dans ce cas, la différence Δₙ₊₁ est toujours nulle car le calcul effectué est la différence entre la prochaine date locale principale t_{p,n+1} et cette même prochaine date locale principale t_{p,n+1}.

L'étape de détermination 170 comprend ensuite, pour chaque entité horloge dépendante 15M et pour l'entité horloge principale 15H, le calcul d'une variance de l'ensemble des valeurs de différence Δₙ₊₁ valides et invalides en mémoire de l'analyseur 27H, 27M correspondant. Le nombre maximal de valeurs en mémoire est par exemple fixé à 1000, les valeurs les plus anciennes étant effacées au fur et à mesure et remplacées par les nouvelles valeurs de différences Δ.

Lorsque la valeur de la variance V calculée, pour une entité horloge dépendante 15M, est inférieure à un seuil prédéterminé, le procédé de synchronisation comprend le calcul de la moyenne des N dernières valeurs de différences valides. Cette différence moyennée est appelée « différence synchronisée Δs». La différence synchronisée Δs est, pour chaque entité horloge dépendante 15M, l'écart temporel entre l'origine du signal principal d'horloge et l'origine du signal dépendant d'horloge généré par l'entité horloge dépendante 15M. Cette différence synchronisée Δs est enregistrée dans l'analyseur de différence 24H, 27M associée. Le seuil prédéterminé est supérieur ou égal à zéro. Par exemple, le seuil prédéterminé est inférieur ou égal à 100 microsecondes (µs). Le nombre N est, par exemple, égal à 100.

Sinon, les étapes 120 à 170 sont itérées jusqu'à ce que la valeur de la variance V calculée soit inférieure au seuil prédéterminé.

Ainsi, le calcul de la différence synchronisée Δs ne prend pas en compte les valeurs de différences invalides, ce qui permet d'éliminer les différences calculées à partir de prochaines dates locales principale t_{p,n+1} reçues trop tard par les entités horloges dépendantes 15M. En effet, dans le cas d'un long temps de trajet, tel que le trajet de durée tₜᵣₐⱼₑₜ₂ illustré sur la figure 3, l'impulsion Iₙ₊₂ est reçue avant l'arrivée du message contenant la prochaine date locale principale t_{p,n+1} de l'impulsion Iₙ₊₁. Dans ce cas, la différence Δₙ₊₁ calculée est la différence entre la date locale principale t_{p,n+1} et la date locale dépendante t_{p,n+2}, ce qui fausserait le calcul de différence synchronisée Δs si on prenait en compte cette valeur de différence Δ.

Il est également défini une différence synchronisée Δs pour le système principal horloge 15 dont la valeur est nulle.

Dans le cas de l'entité horloge principale 15M, la valeur de la variance calculée est nulle puisque les valeurs des différences sont nulles pour l'entité horloge principale 15M.

Le procédé de synchronisation comprend, ensuite, une étape 180 de communication entre les entités horloges 15H, 15M et leurs entités multimédias 16H, 16M respectives.

L'étape de communication 180 comprend, notamment, la transmission de la date locale principale t_{p,n} et de la différence synchronisée Δs du système principal horloge 15 à l'entité multimédia 16H du système principal horloge 15.

L'étape de communication 180 comprend, également, pour chaque entité horloge dépendante 15M, la transmission de la date locale dépendante t_{d,n} et de la différence synchronisée Δs calculées pour cette entité horloge dépendante 15M à l'entité multimédia 16M associé.

Dans ce qui suit, on considère que le système principal horloge 15 est un système de restitution de flux multimédia, distinct du système principal multimédia 12. Le système principal horloge 15 est donc un système dépendant multimédia 14.

En variante, le système principal horloge 15 est le système principal multimédia 12.

Encore en variante, le système principal horloge 15 n'est pas un système de restitution de flux multimédia.

Le procédé de synchronisation comprend, ensuite, une étape 190 de réception de flux multimédia par chaque entité multimédia 15H, 15M et d'association d'une date de restitution tᵣ à une portion du flux multimédia, typiquement à la portion initiale du flux multimédia.

Dans le cas où l'entité multimédia 16M du système principal multimédia 12 reçoit le même flux multimédia que l'ensemble des entités multimédia 15M des systèmes dépendants multimédia 14, une première date de restitution tᵣ est calculée dans la base de temps du système principal multimédia 12 par le module d'association 40M de l'entité multimédia 16M du système principal multimédia 12. La date de restitution tr est calculée à partir du signal principal d'horloge et des différences calculées Δₙ₊₁ pour le système principal multimédia 12. La date de restitution tᵣ calculée est, ensuite, envoyée à l'ensemble des systèmes dépendants multimédia 14 recevant le même flux multimédia que le système principal multimédia 12. Dans ce cas, la première date de restitution tᵣ est égale à la somme d'une date future principale de restitution souhaitée t_{p,s} exprimée dans la base de temps du système principal multimédia 12 et de la différence synchronisée Δs du système principal multimédia 12. La date future principale de restitution souhaitée t_{p,s} est la somme de la date de l'entité horloge du système principal multimédia 12 dans la base de temps du système principal multimédia 12 au moment du calcul de la première date de restitution tᵣ et d'une durée prédéterminée, par exemple égale à 40 ms. La date future principale de restitution souhaitée t_{p,s} est donc postérieure à la date locale principale t_{p,n}. La première date de restitution tᵣ est associée à une portion du flux multimédia reçu par les entités multimédia 16M des systèmes de restitution 12, 14.

La première date de restitution tᵣ exprimée dans la base de temps du système principal multimédia 12 est ensuite envoyée en tant que métadonnée, avec ou sans le flux multimédia, au module d'interprétation 44M du système principal horloge 15 et aux modules d'interprétation 44M des systèmes dépendants multimédia 14 via les entités de communication 17M.

Dans le cas où au moins une entité multimédia 15M d'un système dépendant multimédia 14 reçoit un flux multimédia différent du flux reçu par l'entité multimédia 16M du système principal multimédia 12, au moins une autre date de restitution tᵣ est calculée. Le nombre de date de restitution tᵣ calculé est égal au nombre de flux multimédia différents. Chaque autre date de restitution tᵣ est calculée en sommant une date future dépendante de restitution souhaitée t_{d,s} et la différence synchronisée Δs d'un système dépendant multimédia 14 recevant le flux multimédia différent. Ce système dépendant multimédia 14 est ensuite appelé système dépendant multimédia 14 particulier ou système particulier 14 dans la suite de la description. La date future dépendante de restitution souhaitée t_{d,s} est la somme de la date de l'entité horloge dépendante 16M, de ce système particulier 14 dans la base de temps dépendante de ce système particulier 14 au moment du calcul de la date de restitution tᵣ, et d'une durée prédéterminée, par exemple égale à 40 ms.

Chaque système particulier 14 est choisi arbitrairement parmi l'ensemble des systèmes dépendants multimédia 14 recevant le même flux multimédia différent du flux multimédia reçu par le système principal multimédia 12. Chaque date de restitution tᵣ, calculée pour une portion de flux multimédia et exprimée dans la base de temps dépendante d'un système particulier 14, est envoyée en tant que métadonnée aux modules d'interprétation 44M du système particulier 14 et aux modules d'interprétation 44M de l'ensemble des systèmes dépendants multimédia 14 recevant le même flux multimédia que ledit système particulier 14.

Par exemple, trois flux multimédias sont reçus par l'installation 10 : le premier par le système principal multimédia 12 et un premier groupe de systèmes dépendants multimédia 14, le deuxième par un deuxième groupe de systèmes dépendants multimédia 14 et le troisième par un troisième groupe de systèmes dépendants multimédia 14. La première date de restitution tᵣ est la somme de la date future principale de restitution souhaitée t_{p,s} et de la différence synchronisée Δs du système principal multimédia 12. La deuxième date de restitution tᵣ est calculée par le module d'association 40M de l'un des systèmes dépendants multimédia 14 du deuxième groupe, choisi arbitrairement, en sommant la date future dépendante de restitution souhaitée t_{d,s} et la différence synchronisée Δs du système dépendant multimédia 14 choisi. La troisième date de restitution tᵣ est calculée par le module d'association 40M de l'un des systèmes dépendants multimédia 14 du troisième groupe, choisi arbitrairement, en sommant la date future dépendante de restitution souhaitée t_{d,s} et la différence synchronisée Δs du système dépendant multimédia 14 choisi.

L'étape de réception 190 comprend, ensuite, la réception d'une métadonnée contenant la date de restitution tᵣ, exprimée dans la base de temps du système principal multimédia 12 ou d'un système particulier 14, associée à une portion du flux multimédia par chacun des modules d'interprétation 44M recevant le même flux multimédia que le système 12, 14 envoyant la métadonnée.

Le procédé de synchronisation comprend, ensuite, une étape 200 d'interprétation de la date à laquelle le contenu du flux multimédia doit être restitué localement par chaque entité multimédia 16H, 16M.

L'étape d'interprétation 200 comprend le calcul d'une date effective tₑ par chaque système de restitution 12, 14, exprimée dans la base de temps de chaque système 12, 14 considéré, à laquelle le flux multimédia doit être restitué localement par l'entité multimédia 16H, 16M du système de restitution 12, 14 considéré. La date effective tₑ est calculée à partir du signal d'horloge du système de restitution 12, 14 considéré, de la date de restitution tᵣ reçue par le système et des différences calculées Δ pour le système de restitution 12, 14 considéré.

Pour le système principal multimédia 12, la date effective tₑ est égale à la différence entre la date de restitution tᵣ reçue par le module d'interprétation 44M du système principal multimédia 12 et la différence synchronisée Δs de ce système principal multimédia 12. Ainsi, la date effective tₑ du système principal multimédia 12 est égale à la date future principale de restitution souhaitée t_{p,s} du système principal multimédia 12.

Pour chaque système dépendant multimédia 14, la date effective tₑ est la différence entre la date de restitution tᵣ transmise au module d'interprétation 44M de l'entité multimédia et la différence synchronisée Δs calculée pour ce système dépendant multimédia 14.

Dans le cas où le système dépendant multimédia 14 est un système particulier 14, la date effective tₑ calculée pour ce système dépendant multimédia 14 est la différence entre la date de restitution tᵣ et la différence synchronisée Δs calculée pour ce système particulier 14. Ainsi, la date effective tₑ de chaque système particulier 14 est égale à la date future dépendante de restitution souhaitée t_{d,s} de ce système particulier 14.

Par exemple, comme illustré sur la figure 3, la date de restitution tᵣ est calculée par le système principal multimédia 12 et est envoyée au système dépendant multimédia 14 et au système principal horloge 15. La date effective de restitution tₑ₁ du système principal horloge 15 est égale à la date de restitution tᵣ reçue puisque la différence synchronisée Δs est nulle pour le système principal horloge 15. La date effective de restitution tₑ₂ du système dépendant multimédia 14 est égale à la différence entre la date de restitution tᵣ reçue et la différence synchronisée Δs₂ de ce système dépendant multimédia 14.

La deuxième phase 90 du procédé de restitution de flux multimédia comprend, comprend la restitution du flux multimédia localement par chaque entité multimédia 16H, 16M à la date effective tₑ calculée pour chaque entité multimédia 16H, 16M. Le flux multimédia est restitué avec ou sans traitement audio.

En variante, l'entité horloge 15H du système principal horloge 15 comprend un générateur de pulsations internes à la place du module de détection de pulsations 21M. Le générateur de pulsations internes est propre à émettre des pulsations à une fréquence fixe, par exemple, à 120 Hz. Dans ce cas l'étape de détection 120 comprend la transmission des impulsions générées par le générateur de pulsations internes, d'une part, au module de génération 21H et à l'unité de calcul 26H du système principal horloge 15 et, d'autre part, aux modules de génération 21M et aux unités de calcul 26M des systèmes de restitution 12, 14. Les autres étapes sont identiques.

Encore en variante, l'installation 10 comprend un système mixte à la place d'au moins l'un des systèmes de référence horloge 15. Le système mixte est un système comportant les mêmes composants que les systèmes de référence horloge 15 à la différence que le système mixte est utilisable en tant que système de référence horloge 15 ou en tant que système de restitution 12, 14 distinct d'un système de référence horloge 15. En particulier, le système mixte peut être choisi comme système principal horloge 15. Cependant, lorsque le système mixte n'est pas choisi en tant que système principal horloge 15, le système mixte est propre à fonctionner comme un système de restitution 12, 14 distinct d'un système de référence horloge 15.

Ainsi, le procédé de restitution et, en particulier, le procédé de synchronisation permet de synchroniser des systèmes de restitution de flux multimédia tels que des enceintes non reliées physiquement les unes aux autres par des liens de synchronisation. Le choix du seuil prédéterminé permet notamment une synchronisation plus précise des systèmes de l'installation 10. En choisissant un seuil prédéterminé inférieur ou égal à 100 µs, l'écart de synchronisation entre les systèmes de l'installation 10 est inférieur ou égal à 100 µs.

Il sera bien compris de l'homme du métier que la première date de restitution tᵣ est égale à la somme d'une date future principale de restitution souhaitée t_{p,s} exprimée dans la base de temps de l'entité horloge du système principal multimédia et de la différence synchronisée Δs dudit système principal multimédia. La date future principale de restitution souhaitée t_{p,s} est la somme de la date de l'entité horloge dudit système principal multimédia dans la base de temps du système multimédia au moment du calcul de la première date de restitution tᵣ et d'une durée prédéterminée, par exemple égale à 40 millisecondes.

## Revendications

1. Procédé de synchronisation d'au moins deux systèmes (12, 14) de restitution de flux multimédia, l'un des systèmes de restitution (12, 14) étant un système principal multimédia (12) et au moins l'un des systèmes de restitution (12, 14) étant un système dépendant multimédia (14), le procédé comprenant :
- la détection (120) d'une impulsion d'un même signal de fréquence fixe par chaque système de restitution (12, 14) et par un système principal horloge (15),
- la génération (130), à partir de l'impulsion détectée, d'un signal principal d'horloge par le système principal horloge (15), pour former une base de temps principale, et, par chaque système de restitution (12, 14), d'un signal dépendant d'horloge pour former une base de temps dépendante,
- l'estimation (150) par le système principal horloge (15), à partir de l'impulsion détectée et du signal principal d'horloge, d'une date locale principale de réception de la prochaine impulsion dans la base de temps principale, et par chaque système de restitution (12, 14), à partir de l'impulsion détectée et du signal dépendant d'horloge dudit système de restitution (12, 14), d'une date locale dépendante de réception de la prochaine impulsion dans la base de temps dépendante dudit système de restitution (12, 14),
- pour chaque système de restitution (12, 14), le calcul (170) de la différence entre la date locale principale du système principal horloge (15) et la date locale dépendante du système de restitution (12, 14) considéré et la mise en mémoire de la différence calculée,
- pour chaque système de restitution (12, 14), l'itération des étapes précédentes (120, 130, 150, 170) jusqu'à ce qu'une première condition sur les différences calculées pour le système de restitution (12, 14) considéré soit réalisée, pour chaque système de restitution (12, 14), une variance des différences calculées pour le système de restitution (12, 14) considéré étant calculée, la première condition étant réalisée lorsque la variance calculée est inférieure à un seuil prédéterminé,
- pour chaque système de restitution (12, 14), le calcul de la moyenne, appelée différence synchronisée, des N dernières valeurs de différences valides, une différence valide étant définie de la manière suivante : la distance calculée est comparée par rapport à une différence étalon propre au système de restitution considéré, la valeur initiale de la différence étalon étant la valeur de la première différence calculée pour le système de restitution considéré, lorsque la différence calculée est inférieure à la différence étalon, la valeur de la différence étalon est remplacée par la valeur de la différence calculée et la différence calculée est considérée valide,
- la réception (190) d'un flux multimédia par chacun des systèmes de restitution (12, 14),
- l'envoi (190), par le système principal multimédia (12), au moins au système dépendant multimédia (14), d'une date de restitution exprimée dans la base de temps du système principal multimédia (12), la date de restitution étant calculée à partir du signal principal d'horloge et des différences calculées pour le système principal multimédia (12), la date de restitution étant égale à la somme d'une date future principale de restitution souhaitée exprimée dans la base de temps du système principal multimédia (12) et de la différence synchronisée obtenue pour le système principal multimédia (12),
- le calcul (200), par chaque système de restitution (12, 14), dans la base de temps du système de restitution (12, 14) considéré, d'une date effective de restitution du flux multimédia de sorte à synchroniser les systèmes de restitution (12, 14), la date effective de restitution étant calculée à partir du signal d'horloge du système de restitution (12, 14) considéré, de la date de restitution et des différences calculées pour le système de restitution (12, 14) considéré, la date effective de restitution étant égale à la différence entre la date de restitution et la différence synchronisée dudit système de restitution considéré.

2. Procédé selon la revendication 1, dans lequel le seuil prédéterminé est inférieur ou égal à 100 microsecondes.

3. Procédé de synchronisation selon la revendication 1 ou 2, dans lequel les impulsions sont issues du réseau électrique domestique (8).

4. Procédé de synchronisation selon l'une quelconque des revendications précédentes, dans lequel le système principal horloge (15) est un système de restitution (12, 14) de flux multimédia.

5. Procédé de synchronisation selon l'une quelconque des revendications précédentes, dans lequel lorsqu'au moins un système de restitution (14) particulier reçoit un flux multimédia différent du flux multimédia reçu par le système principal multimédia (12), le procédé comprend l'envoi par ledit système dépendant multimédia (14) particulier, à la place du système principal multimédia (12), d'une date de restitution du flux multimédia différent, exprimée dans la base de temps dudit système dépendant multimédia (14) particulier, à l'ensemble des systèmes dépendants multimédia (14) recevant le même flux multimédia différent que ledit système dépendant multimédia (14) particulier.

6. Procédé de restitution de flux multimédia par au moins deux systèmes (12, 14) de restitution de flux multimédia, l'un des systèmes de restitution (12, 14) étant un système principal multimédia (12) et au moins l'un des systèmes de restitution (12, 14) étant un système dépendant multimédia (14), le procédé comprenant :
- la synchronisation (80, 100, 110, 120, 130, 140, 150, 160, 170, 180, 190, 200) des systèmes de restitution (12, 14) par un procédé de synchronisation selon l'une quelconque des revendications 1 à 5, et
- la restitution (90) par chaque système de restitution (12, 14) du flux multimédia reçu à la date effective déterminée pour chaque système de restitution (12, 14).

7. Installation (10) de restitution de flux multimédia comprenant :
- au moins deux systèmes (12, 14) de restitution de flux multimédia, l'un des systèmes de restitution (12, 14) étant un système principal multimédia (12) et au moins l'un des systèmes de restitution (12, 14) étant un système dépendant multimédia (14), et
- un système principal horloge (15),
les systèmes de restitution (12, 14) et le système principal horloge étant propres à mettre en œuvre un procédé de restitution de flux multimédia selon la revendication 6.

## Patentansprüche

1. Verfahren zur Synchronisation von mindestens zwei Systemen (12, 14) zur Wiedergabe von Multimedia-Streams, wobei eines der Wiedergabesysteme (12, 14) ein Haupt-Multimediasystem (12) ist und mindestens eines der Wiedergabesysteme (12, 14) ein abhängiges Multimedia-System (14) ist, das Verfahren umfassend:
- das Erfassen (120) eines Impulses desselben Signals mit fester Frequenz durch jedes Wiedergabesystem (12, 14) und durch ein Haupt-Zeitgebersystem (15),
- das Erzeugen (130), aus dem erfassten Impuls, eines Haupt-Zeitgebersignals durch das Haupt-Zeitgebersystem (15), um eine Haupt-Zeitbasis zu bilden, und, durch jedes Wiedergabesystem (12, 14), eines abhängigen Zeitgebersignals, um eine abhängige Zeitgeberbasis zu bilden,
- das Schätzen (150), durch das Haupt-Zeitgebersystem (15) anhand des erfassten Impulses und des Haupt-Zeitgebersignals, eines lokalen Hauptdatums des Empfangs des nächsten Impulses in der Haupt-Zeitgeberbasis, und durch jedes Wiedergabesystem (12, 14), anhand des erfassten Impulses und des abhängigen Zeitgebersignals, des Wiedergabesystems (12, 14) eines abhängigen lokalen Datums des Empfangs des nächsten Impulses in der abhängigen Zeitgeberbasis des Wiedergabesystems (12, 14),
- für jedes Wiedergabesystem (12, 14) das Berechnen (170) der Differenz zwischen dem lokalen Hauptdatum des Haupt-Zeitgebersystems (15) und dem abhängigen lokalen Datum des betrachteten Wiedergabesystems (12, 14) und das Speichern der berechneten Differenz,
- für jedes Wiedergabesystem (12, 14) das Iterieren der vorherigen Schritte (120, 130, 150, 170), bis eine erste Bedingung an die für das betrachtete Wiedergabesystem (12, 14) berechneten Differenzen erfüllt ist, wobei für jedes Wiedergabesystem (12, 14) eine Varianz der für das betrachtete Wiedergabesystem (12, 14) berechneten Differenzen berechnet wird, wobei die erste Bedingung erfüllt ist, wenn die berechnete Varianz unter einem vorbestimmten Schwellenwert ist,
- für jedes Wiedergabesystem (12, 14) das Berechnen des als synchronisierte Differenz bezeichneten Mittelwerts der letzten N gültigen Differenzwerte, wobei eine gültige Differenz wie folgt definiert ist: der berechnete Abstand wird mit einer dem betrachteten Wiedergabesystem eigenen Standarddifferenz verglichen, wobei der Anfangswert der Standarddifferenz der Wert der ersten für das betrachtete Wiedergabesystem berechneten Differenz ist, wenn die berechnete Differenz kleiner ist als die Standarddifferenz, wird der Wert der Standarddifferenz durch den Wert der berechneten Differenz ersetzt und die berechnete Differenz wird als gültig betrachtet,
- das Empfangen (190) eines Multimedia-Streams durch jedes der Wiedergabesysteme (12, 14),
- das Senden (190), durch das Haupt-Multimediasystem (12) zumindest an das abhängige Multimediasystem (14) eines Wiedergabedatums, das in der Zeitgeberbasis des Haupt-Multimediasystems (12) ausgedrückt ist, wobei das Wiedergabedatum aus dem Haupt-Zeitgebersignal und den für das Haupt-Multimediasystem (12) berechneten Differenzen berechnet wird, wobei das Wiedergabedatum gleich wie die Summe eines gewünschten zukünftigen Haupt-Wiedergabedatums, das in der Zeitgeberbasis des Haupt-Multimediasystems (12) ausgedrückt ist, und der synchronisierten Differenz ist, die für das Haupt-Multimediasystem (12) erlangt wird,
- das Berechnen (200), durch jedes Wiedergabesystem (12, 14), in der Zeitgeberbasis des betrachteten Wiedergabesystems (12, 14), eines effektiven Wiedergabedatums des Multimediastroms, um die Wiedergabesysteme (12, 14) zu synchronisieren, wobei das effektive Wiedergabedatum anhand des Zeitgebersignals des betrachteten Wiedergabesystems (12, 14) aus dem Wiedergabedatum und der berechneten Differenzen für das betrachtete Wiedergabesystem (12, 14) berechnet wird, wobei das effektive Wiedergabedatum gleich wie die Differenz zwischen dem Wiedergabedatum und der synchronisierten Differenz des Wiedergabesystems ist.

2. Verfahren nach Anspruch 1, wobei der vorbestimmte Schwellenwert kleiner als oder gleich wie 100 Mikrosekunden ist.

3. Synchronisationsverfahren nach Anspruch 1 oder 2, wobei die Impulse aus dem Hausstromnetz (8) stammen.

4. Synchronisationsverfahren nach einem der vorherigen Ansprüche, wobei das Haupt-Zeitgebersystem (15) ein Wiedergabesystem (12, 14) für Multimedia-Streams ist.

5. Synchronisationsverfahren nach einem der vorherigen Ansprüche, wobei, wenn mindestens ein jeweiliges Wiedergabesystem (14) einen Multimedia-Stream empfängt, der sich von dem durch das Haupt-Multimediasystem (12) empfangenen Multimedia-Stream unterscheidet, das Verfahren das Senden durch das bestimmte abhängige Multimediasystem (14) umfasst, anstelle des Haupt-Multimediasystems (12) ein Datum der Wiedergabe des unterschiedlichen Multimedia-Streams, ausgedrückt in der Zeitgeberbasis des bestimmten abhängigen Multimediasystems (14), an alle abhängigen Multimediasysteme (14) sendet, die denselben unterschiedlichen Multimedia-Stream wie das bestimmte abhängige Multimediasystem (14) empfangen.

6. Verfahren zur Wiedergabe von Multimedia-Streams durch mindestens zwei Systeme (12, 14) zur Wiedergabe von Multimedia-Streams, wobei eines der Wiedergabesysteme (12, 14) ein Haupt-Multimediasystem (12) ist und mindestens eines der Wiedergabesysteme (12, 14) ein abhängiges Multimediasystem (14) ist, das Verfahren umfassend:
- das Synchronisieren (80, 100, 110, 120, 130, 140, 150, 160, 170, 180, 190, 200) der Wiedergabesysteme (12, 14) durch ein Synchronisationsverfahren nach einem der Ansprüche 1 bis 5, und
- das Wiedergeben (90) durch jedes Wiedergabesystem (12, 14) des Multimedia-Streams, der an dem für jedes Wiedergabesystem (12, 14) bestimmten tatsächlichen Datum empfangen wird.

7. Anlage (10) zur Wiedergabe von Multimedia-Streams, umfassend:
- mindestens zwei Systeme (12, 14) zur Wiedergabe von Multimedia-Streams, wobei eines der Wiedergabesysteme (12, 14) ein Haupt-Multimediasystem (12) ist und mindestens eines der Wiedergabesysteme (12, 14) ein abhängiges Multimediasystem (14) ist, und
- ein Haupt-Zeitgebersystem (15),
wobei die Wiedergabesysteme (12, 14) und das Haupt-Zeitgebersystem geeignet sind, ein Verfahren zur Wiedergabe von Multimedia-Streams nach Anspruch 6 durchzuführen.

## Claims

1. A synchronisation method for synchronising at least two rendering systems (12, 14) for rendering multimedia streams, one of the rendering systems (12, 14) being a main multimedia system (12) and at least one of the rendering systems (12, 14) being a dependent multimedia system (14), the method comprising:
- the detection (120) of a pulse of a same signal of fixed frequency by each rendering system (12, 14) and by a main clock system (15),
- the generation (130), based on the detected pulse of a main clock signal by the main clock system (15) in order to form a main time base, and, by each rendering system (12, 14), of a dependent clock signal in order to form a dependent time base;
- the estimation (150) by the main clock system (15) based on the detected pulse and the main clock signal, of a main local date of reception of the subsequent pulse in the main time base, and by each rendering system (12, 14) based on the detected pulse and the dependent clock signal of the said rendering system (12, 14) of a dependent local date of reception of the subsequent pulse in the dependent time base of the said rendering system (12, 14)
- for each rendering system (12, 14), the calculation (170) of the difference between the main local date of the main clock system (15) and the dependent local date (of the considered rendering system (12, 14) and the storing of the calculated difference;
- for each rendering system (12, 14), the iteration of the previous steps (120, 130, 150, 170) until a first condition concerning the differences calculated for the considered rendering system (12, 14) has been fulfilled, for each rendering system (12, 14), a variance of the differences calculated for the considered rendering system (12, 14) is calculated, the first condition being fulfilled when the calculated variance is lower than a predetermined threshold,
- for each rendering system (12, 14), the calculation of the average, called the synchronized difference, of the last N valid difference values, a valid difference being defined as follows: the calculated distance is compared with respect to a standard difference specific to the considered rendering system, the initial value of the standard difference being the value of the first difference calculated for the considered rendering system, when the calculated difference is less than the standard difference, the value of the standard difference is replaced by the value of the calculated difference and the calculated difference is considered valid,
- the receiving (190) of a multimedia stream by each of the rendering systems (12, 14);
- the sending (190), by the main multimedia system (12), at least to the dependent multimedia system (14), of a rendering date expressed in the time base of the main multimedia system (12), the rendering date being calculated based on the main clock signal and the differences calculated for the main multimedia system (12), the rendering date being equal to the sum of a desired future main rendering date expressed in the time base of the main multimedia system (12) and the synchronized difference obtained for the main multimedia system (12),
- the calculation (200), by each rendering system (12, 14) in the time base of the considered rendering system (12, 14), of an effective date (tₑ) of rendering of the multimedia stream so that the rendering systems (12, 14) are synchronized, the effective rendering date being calculated based on the clock signal of the considered rendering system (12, 14), the rendering date and the calculated differences for the considered rendering system (12, 14), the effective rendering date being equal to the difference between the rendering date and the synchronized difference of the said considered rendering system.

2. A method according to claim 1, wherein the predetermined threshold value is less than or equal to 100 microseconds.

3. A synchronisation method according to claim 1 or 2, wherein the pulses originate from the domestic electric network (8).

4. A synchronisation method according to any one of the preceding claims, wherein the main clock system (15) is a rendering system (12, 14) for rendering multimedia streams.

5. A synchronisation method according to any one of the preceding claims, wherein when at least one particular rendering system (14) receives a multimedia stream that is different from the multimedia stream received by the main multimedia system (12), the method comprises the sending by the said particular dependent multimedia system (14), instead of the main multimedia system (12), of a date of rendering of the different multimedia stream, expressed in the time base of the said particular dependent multimedia system (14), to all of the dependent multimedia systems (14) receiving the same different multimedia stream as the said particular dependent multimedia system (14).

6. A rendering method for rendering multimedia streams by at least two systems (12, 14) for rendering multimedia streams, one of the rendering systems (12, 14) being a main multimedia system (12) and at least one of the rendering systems (12, 14) being a dependent multimedia system (14), the method comprising:
- the synchronisation (80, 100, 110, 120, 130, 140, 150, 160, 170, 180, 190, 200) of the rendering systems (12, 14) by a synchronisation method according to any one of claims 1 to 5; and
- the rendering (90) by each rendering system (12, 14) of the multimedia streams received on the effective date determined for each rendering system (12, 14).

7. A rendering installation (10) for rendering multimedia streams comprising:
- at least two rendering systems (12, 14) for rendering multimedia streams, one of the rendering systems (12, 14) being a main multimedia system (12) and at least one of the rendering systems (12, 14 ) being a dependent multimedia system (14); and
- a main clock system (15);
the rendering systems (12, 14) and the main clock system being capable of implementing a rendering method for rendering multimedia streams according to claim 6.
